# EUROPÄISCHE PATENTANMELDUNG

(11) **EP 2 724 697 A2**
(43) Veröffentlichungstag der Anmeldung: **30.04.2014**
(21) Anmeldenummer: 13188217.7
(22) Anmeldetag: 11.10.2013
(51) Int. Cl.: A61G 5/04

(54) **Separate Antriebshilfe für Rollstühle**

(30) Priorität: 26.10.2012 DE 102012219689
(71) Anmelder: Hodak, Hans, 12277 Berlin (DE)
(72) Erfinder: Hodak, Johann, 12707 Berlin (DE)
(74) Vertreter: Grünecker, Kinkeldey, Stockmair & Schwanhäusser

(57) **Zusammenfassung**

Die Erfindung betrifft eine separate Antriebshilfe (1) für rollbare Personen- oder Lastenträger (3), insbesondere für Rollstühle, mit einem Antriebsmotor, wenigstens einem Antriebsrad (21), wenigstens einem Sitz (9) für einen Fahrer, und einer Kupplungseinrichtung (5), durch die die Antriebshilfe (1) an dem Personen- oder Lastenträger (3) wiederholt lösbar befestigbar ist, wobei die Kupplungseinrichtung (5) ein Gelenk (66) aufweist, das zwischen der Kupplungseinrichtung (5) und dem Antriebsrad (21) angeordnet ist. Um eine externe Antriebshilfe für rollbare Personen- oder Lastenträger bereitzustellen, die im Gespann mit dem Rollstuhl eine agile Handhabung ermöglichen soll, so dass auch alte Personen die Antriebshilfe nutzen können, und die leicht am Personen- oder Lastenträger zu befestigen ist, ist erfindungsgemäß vorgesehen, dass im am Personen- oder Lastenträger (3) montierten Zustand der Antriebshilfe (1) das Gelenk (66) mit einer Radachse (61) des Personen- oder Lastenträgers (3) fluchtet.

## Beschreibung

Die Erfindung betrifft eine separate Antriebshilfe für rollbare Personen- oder Lastenträger, insbesondere für Rollstühle, mit einem Antriebsmotor, wenigstens einem Antriebsrad, wenigstens einem Sitz für einen Fahrer, und einer Kupplungseinrichtung, durch die die Antriebshilfe an dem Personen- oder Lastenträger wiederholt lösbar befestigbar ist, wobei die Kupplungseinrichtung ein Gelenk aufweist, das zwischen der Kupplungseinrichtung und dem Antriebsrad angeordnet ist.

Die vorliegende Erfindung eignet sich für den Antrieb von verschiedensten Lastenträgern wie zum Beispiel Werkstattwagen, Aktenwagen oder Handwagen. Der Übersichtlichkeit halber wird die vorliegende Erfindung an einem Rollstuhl beschrieben, ohne dabei die Verwendung an anderen Rollwagen auszuschließen.

Externe Antriebshilfen für Rollstühle sind allgemein bekannt. In der Regel werden elektrische Antriebsaggregate an den großen Rollstuhlantriebsrädern oder unterhalb des Rollstuhls angebracht. Rollstuhlantriebshilfen, die zur Beförderung einer Begleitperson dienen, sind in der Regel fahrradartig konstruiert und entsprechend sperrig. Dies ist von großem Nachteil, wenn Rollstuhl und Antriebshilfe gemeinsam zum Beispiel in einem Kofferraum verstaut werden sollen. Kompakte Antriebshilfen, auf denen ein Fahrer mitfahren kann und für die ein elektrischer Antrieb vorgesehen ist, sind nur wenige bekannt. Die bekannten Vorrichtungen weisen allerdings Nachteile auf, welche bei der erfindungsgemäßen Vorrichtung nicht auftreten.

Die Schubeinrichtung aus DE 20 2006 014 217 U1 nutzt ein Einrad, welches mittels einer Schubstange an einer Querstrebe am Rollstuhlrahmen befestigt wird. Die Querstrebe wird dabei mittels Klemmverschlüssen an den Vertikalrohren des Rollstuhlrahmens befestigt. Zur Verbesserung der Nachlaufeigenschaften ist der Sattel gegenüber dem Antriebsrad versetzt. Das Gespann dieser Druckschrift dürfte recht schwergängig sein.

Die Vorrichtung zum Zwecke des Anschiebens aus EP 1 364 634 A2 weist einen brettförmigen Hauptkörper auf. Zur Befestigung des Hauptkörpers am Rollstuhl werden an Letzterem zwei Querbretter an die unteren Endrohre des Rollstuhlrahmens angebracht. Zwischen diese wird dann das vordere Ende des Hauptkörpers geklemmt und durch einen Bolzen mit diesem verbunden. Dieser Bolzen stellt zugleich ein Drehgelenk dar und bildet die Lenkachse des Gefährts. Auch dieses Gefährt erfordert erhebliche Kräfte beim Lenken und ist nur eingeschränkt manövrierfähig.

Es ist also die Aufgabe der Erfindung, eine externe Antriebshilfe für rollbare Personen- oder Lastenträger bereitzustellen, die im Gespann mit dem Rollstuhl eine agile Handhabung ermöglichen soll, so dass auch alte Personen die Antriebshilfe nutzen können, und die leicht am Personen- oder Lastenträger zu befestigen ist.

Diese Aufgabe wird für die eingangs genannte separate Antriebshilfe dadurch gelöst, dass im am Personen- oder Lastenträger montierten Zustand der Antriebshilfe das Gelenk mit einer Achse des Personen- oder Lastenträgers fluchtet.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen, wobei die konstruktiven Maßnahmen und deren Wirkungen lediglich beispielhaft für eine Antriebshilfe an einem Rollstuhl beschrieben sind. Selbstverständlich kann die Antriebshilfe auch an anderen rollbaren Wagen, wie zum Beispiel die anfangs erwähnten Werkstatt- oder Aktenwagen, verwendet werden.

Die erfindungsgemäße Antriebshilfe kann in einer Ausgestaltung im Wesentlichen aus einem Körper, welcher das Antriebsaggregat enthält, und einem Gestänge, das die Verbindung zum Rollstuhl herstellt, bestehen. Am Körper der Antriebshilfe können sich das Antriebsrad bzw. die Antriebsräder, wenigstens ein Sitz für einen Fahrer sowie seitliche Fußauflagen befinden.

In einer besonders vorteilhaften Ausführung kann die Antriebshilfe nur ein einziges Rad besitzen, welches gleichzeitig das Antriebsrad der Antriebshilfe und damit des kombinierten Gefährts darstellt. Alternativ kann die Antriebshilfe auch zwei Räder besitzen, insbesondere zwei nebeneinander positionierte Räder, die zusammen ein Doppelrad bilden.

Die Sitzgelegenheit für den Fahrer kann über dem Antriebsrad positioniert sein, so dass die Gewichtskraft des Fahrers über das Antriebsrad in den Boden geleitet wird. Dies ist vorteilhaft, da eine zu starke Belastung des Rollstuhls mit dem Gewicht des Fahrers vermieden wird. Als Sitzgelegenheit kann zum Beispiel ein Fahrradsattel verwendet werden. Die Sitzgelegenheit kann höhenverstellbar sein, um an die Größe des Fahrers angepasst zu werden. Die Sitzgelegenheit kann von einer Stütze getragen sein, deren Achse in Schwerkraftrichtung verlängert die Achse des Antriebsrads schneidet. Dabei können Abweichungen der Achsen bis zu 2 cm tolerierbar sein. In einer besonders vorteilhaften Ausführung kann die Sitzgelegenheit einklappbar sein, um die Antriebshilfe platzsparend verstauen zu können. Sie kann dann zum Beispiel im Kofferraum eines Pkws transportiert werden.

Zwischen dem Sitz für den Fahrer und der Kupplungseinrichtung kann die Antriebshilfe seitliche Fußauflagen für den Fahrer aufweisen. Diese Fußauflagen können auch als Fußhebel ausgebildet sein, mit denen Antriebskraft und Bremskraft gesteuert werden. Die Fußhebel können als Wippe ausgestaltet sein, deren längeres Ende in Fahrtrichtung weist und als Auflage für den Vorfuß des Fahrers dient, und deren kürzeres Ende entgegen die Fahrtrichtung weist und als Auflage für die Ferse des Fahrers dient. Die Größe der Fußauflagen kann gängigen Schuhgrößen entsprechen, wobei die Länge bevorzugt zwischen 15 und 35 cm. betragen kann.

Die Wippen können so angeordnet sein, dass die Füße des Fahrers auf diesen ohne Anstrengung für den Fahrer ruhen können. Aus dieser Ruhelage heraus können die Wippen als Fußhebel leichtgängig betätigt werden. Die Auflage der Füße und die Betätigung der als Fußhebel ohne Kraftaufwand sind wichtige Eigenschaften für die Nutzung der Antriebshilfe durch ältere Personen.

An handelsüblichen Faltrollstühlen sind die großen Antriebsräder in der Regel einzeln aufgehängt. Die Achsen der beiden einzelnen Räder setzen sich dabei ein Stück weit nach innen fort. An diesen Achsfortsätzen kann die Kupplungseinrichtung angebracht werden. In einer besonders vorteilhaften Ausführung können diese Achsfortsätze zum Beispiel durch ein Rohr oder ein Gestänge miteinander verbunden werden, so dass eine einzige Achse entsteht. Die Verbindung stellt dann eine Achskupplung dar. Diese Achskupplung kann im Wesentlichen ein Teil der Kupplungseinrichtung sein.

Die Antriebshilfe kann zwischen der Kupplungseinrichtung und dem Antriebsrad ein Gelenk aufweisen, das mit einer Radachse des Rollstuhls fluchtet. Dieses Gelenk kann zwei Gelenkachsen aufweisen, wobei das Gelenk in zwei Freiheitsgraden beweglich sein kann. Die beiden Gelenkachsen können sich bevorzugt schneiden. Die Kupplungseinrichtung kann eine quer zur Fahrtrichtung weisende Achsstrebe und eine zwischen dem Gelenk und dem Antriebsrad in Fahrtrichtung weisende Schubstange aufweisen. An der Mitte der Achsstrebe kann die Schubstange der Antriebshilfe angebracht sein, so dass ein T-förmiges Gestänge entsteht. Die Achsstrebe kann sich durchgängig zwischen den Achsfortsätzen des Rollstuhls erstrecken.

Die Achsstrebe kann von der Schubstange durchsetzt sein. In dem Bereich dieser Durchsetzung kann eine Gelenkachse angeordnet sein.

Die Achsstrebe kann drehbar mit den Achsfortsätzen verbunden sein. Die Schubkraft der Antriebshilfe wirkt in diesem Fall über das Gestänge auf die Achsen der Rollstuhlräder. Im Schnittbereich der Schubstange und der Achsstrebe kann sich das Gelenk befinden, so dass das Gefährt lenkbar ist und auch Unterschiede in der Neigung des Untergrunds ausgleichen kann.

Die Drehachse und die Schwenkachse des Gelenks können möglichst nah an der Achse der beiden Rollstuhlräder liegen. Bevorzugt schneidet die Drehachse des Gelenks die Achse der Rollstuhlräder, wodurch eine leichte Lenkung des kombinierten Gefährts aus Rollstuhl und Antriebshilfe möglich wird. Konstruktions- und fertigungsbedingte Abweichungen bis zu 4 cm können dabei tolerierbar sein.

Die Schwenkachse des Gelenks kann mit der Achse der Rollstuhlräder übereinstimmen. Dabei können konstruktions- und fertigungsbedingte Abweichungen bis zu 2 cm tolerierbar sein. Diese Art der Befestigung der Antriebshilfe an der Achse der Rollstuhlräder führt zu einer vorteilhaften Kraftübertragung zwischen Antriebshilfe und Rollstuhl. Es werden keine Kippbewegungen wie bei anderen Antriebshilfen im Stand der Technik induziert. Da die Antriebskraft nicht über den Rahmen übertragen wird, entstehen keine Verluste durch Bewegung oder Verformungen des Rahmens. Die Art der Befestigung ermöglicht es, die Antriebshilfe auch bei bereits vorhandenen Rollstühlen nachzurüsten.

Ein Einklappmechanismus für die Sitzgelegenheit kann so gestaltet sein, dass die Bewegung der Sitzgelegenheit über eine Betätigungseinrichtung, bestehend aus Kraftübertragungselementen, wie Gestänge oder Bowdenzüge, auf eine Kupplungseinrichtung der Antriebshilfe übertragen wird. So kann zum Beispiel eine Verriegelung am Rollstuhl ausgelöst werden, die die Antriebshilfe am Rollstuhl ankuppelt, wenn die Sitzgelegenheit aufgeklappt wird, und wieder löst, wenn die Sitzgelegenheit eingeklappt wird.

Zur wiederholt lösbaren Befestigung der Antriebshilfe am Rollstuhl, kann die Kupplungseinrichtung Adapter aufweisen, die an die Achsfortsätze der einzeln aufgehängten Räder angebracht werden. Die Adapter können rohrförmige Verlängerungen sein, die fest mit den Achsfortsätzen verbunden werden. Die Achsstrebe der Kupplungseinrichtung kann komplementär zu den Achsfortsätzen ausgebildet sein. Die Achsstrebe der Kupplungseinrichtung kann in einer Ausführungsform an ihren Enden in axialer Richtung halbrohrförmig sein, so dass sie mit diesen Enden auf die Achsverlängerungen aufgelegt werden kann.

Die Achsstrebe kann Befestigungselemente aufweisen, die komplementär zu den Achsfortsätzen ausgestaltet sind. Die Befestigungselemente können Sperrelemente aufweisen, wobei die Sperrelemente aus einer Montagestellung, in der sie von den Achsfortsätzen gelöst sind, in eine Kupplungsstellung bewegbar sein können, in der sie an den Achsfortsätzen verriegelt sind.

Die Sperrelemente können mit einer Betätigungseinrichtung verbunden sein und durch die Betätigungseinrichtung zwischen Montagestellung und Kupplungsstellung bewegbar sein.

In einer Ausführungsform können sich Befestigungselemente wie z.B. Bolzen oder Stifte in der Achsstrebe befinden, die beweglich sind und sich mit je einem Ende in die rohrförmigen Achsverlängerungen einschieben lassen. Die Befestigungsorgane können sich dann jeweils mit einem Ende in der Achsstrebe und mit dem anderen Ende in dem Halteorgan befinden, so dass die Antriebshilfe am Rollstuhl verriegelt ist.

In einer weiteren Ausführungsform können die Befestigungselemente als drehbare Manschetten ausgebildet sein, die sich im geöffneten Zustand in die halbrohrförmigen Enden der Achsstrebe einfügen, so dass diese auf die Achsfortsätze aufgelegt werden können. Bei einer Drehung der Manschetten können diese dann die Achsfortsätze umgreifen und dadurch die Antriebshilfe am Rollstuhl befestigen.

In einer besonders vorteilhaften Ausführung können die Befestigungsorgane mit der Betätigungseinrichtung verbunden sein. Ein Aufklappen des Sitzes kann dann die Befestigungsorgane an den Achsfortsätzen verriegeln, so dass die Antriebshilfe am Rollstuhl befestigt ist. Die Antriebshilfe befindet sich in diesem Fall in einer Betriebstellung.

Der Sitz kann aus einer Betriebsstellung in eine Transportstellung beweglich sein, wobei die Kubatur der Antriebshilfe in dieser Transportstellung kleiner als in der Betriebsstellung ist. Die Betätigungseinrichtung kann bedienungsseitig mit dem Sitz gekoppelt sein, wobei in der Transportstellung die Sperrelemente über die Betätigungseinrichtung in die Montagestellung überführt sind, so dass die Antriebshilfe vom Personen- oder Lastenträger gelöst ist und in der Betriebsstellung über die Betätigungseinrichtung in die Kupplungsstellung überführt sind, in der die Antriebshilfe am Personen- oder Lastenträger befestigt ist.

Ein Einklappen des Sitzes kann die Befestigungsorgane von den Halteorganen trennen, wodurch die Antriebshilfe vom Rollstuhl gelöst wird und sich in einer Transportstellung befindet.

Die Antriebshilfe kann einen Ständer besitzen, der die Antriebshilfe aufstützt, wenn diese nicht am Rollstuhl befestigt ist. Dieser Ständer kann einklappbar sein, um ihn am Körper der Antriebshilfe anzulegen, wenn er nicht benötigt wird.

Zur Lenkung des kombinierten Gefährts aus Rollstuhl und Antriebhilfe können die Rollstuhlhaltegriffe verwendet werden. Es ist dann keine zusätzliche Lenkvorrichtung notwendig. An der Schubstange der Antriebshilfe kann der Abstand zwischen Antriebshilfe und Rollstuhl verändert werden. Dadurch kann der Abstand der Haltegriffe zum Fahrer auf die Körpergröße und Armlänge des Fahrers eingestellt werden, so dass dieser die Haltegriffe bequem erreichen und sicher halten kann.

Eine vorteilhafte Ausführung der Antriebshilfe kann einen Elektromotor als Antrieb und einen Akkumulator als Energieträger nutzen. Alternativ kann zum Beispiel statt eines Akkumulators eine Brennstoffzelle verwendet werden oder anstelle eines Elektromotors ein Verbrennungsmotor. Bei der Ausführung mit Elektromotor und Akkumulator kann die Aufladung des Akkumulators direkt am Gerät über eine Buchse am Gehäuse erfolgen, oder der Akkumulator kann entnehmbar sein, um ihn an einem Ladegerät zu laden.

Die Antriebseinheit kann einen Antriebsmotor mit einem Untersetzungsgetriebe, insbesondere mit einem Schneckengetriebe aufweisen. Die Geschwindigkeit der Antriebshilfe und des kombinierten Gefährts aus Rollstuhl und Antriebshilfe kann zulassungsbedingt gedrosselt sein, insbesondere auf eine Schrittgeschwindigkeit von 6 km/h.

Die Antriebshilfe kann eine Sicherheitseinrichtung aufweisen, durch die eine Anfahrbeschleunigung begrenzt ist. Die Begrenzung der Anfahrbeschleunigung kann insbesondere durch eine Drehmomentsbegrenzung erflogen. Dadurch ist eine Beschleunigung möglich, die für alte oder kranke Personen eine sichere Fahrweise erlaubt.

Im Folgenden ist die Erfindung beispielhaft anhand von Ausführungsbeispielen mit Bezug auf die Zeichnungen erläutert.

Es zeigen:
- Fig. 1: eine schematische Darstellung eines Ausführungsbeispiels einer erfindungsgemäßen Antriebshilfe an einem Rollstuhl in Seitenansicht;
- Fig. 2: das Ausführungsbeispiel aus Fig. 1 in der Draufsicht;
- Fig. 3: eine schematische Darstellung des Ausführungsbeispiels aus Fig. 1, vom Rollstuhl abgekoppelt in einer Transportstellung;
- Fig. 4: eine schematische Draufsicht eines Befestigungsorgans an einer Achsstrebe;
- Fig. 5: ein weiteres Ausführungsbeispiel für ein Befestigungselement an einer Achsstrebe.

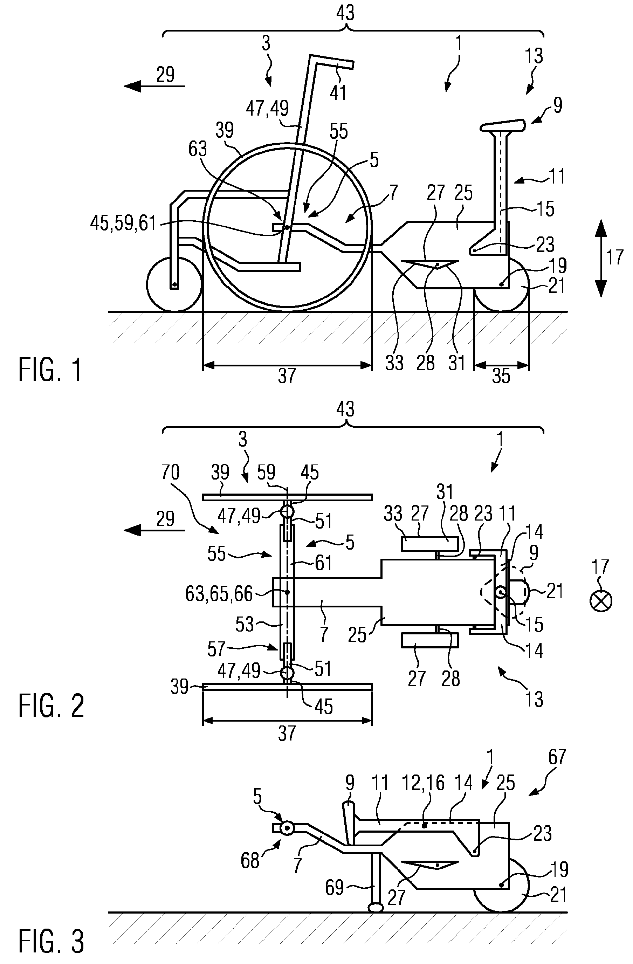

Fig. 1 zeigt eine separate Antriebshilfe 1, verbunden mit einem Rollstuhl 3 in einer Betriebsstellung 13. Die Antriebshilfe 1 ist mit ihrer Kupplungseinrichtung 5 am rollstuhlseitigen Ende der Schubstange 7 am Rollstuhl 3 befestigt.

Antriebshilfe 1 und Rollstuhl bilden zusammen das kombinierte Gefährt 43.

In dieser Betriebsstellung 13 sind der Sitz 9 und die dazugehörige Stütze 11 aufgeklappt. Der Sitz 9 befindet sich über dem Antriebsrad 21, wobei die Längsachse 15 in Schwerkraftrichtung 17 verlängert, die Radachse 19 des Antriebsrades 21 schneidet. Dabei sind konstruktions- und fertigungsbedingte Abweichungen der Längsachse 15 der Stütze 11 und der Radachse 19 des Antriebsrades 21 bis zu 2 cm tolerierbar. Die Stütze 11 ist durch Befestigungsorgane 23 mit dem Körper 25 der Antriebshilfe 1 unverlierbar verbunden.

Am Körper 25 der Antriebshilfe 1 befinden sich paarweise Fußauflagen 27. Diese Fußauflagen 27 befinden sich zwischen dem Sitz 9 für den Fahrer und der Kupplungseinrichtung 5 seitlich am Körper 25 der Antriebshilfe 1. Die Fußauflagen 27 sind durch Befestigungsorgane 28 mit dem Körper 25 der Antriebshilfe 1 unverlierbar verbunden. Sie dienen zur Auflage der Füße des Fahrers während der Fahrt. Breite und Länge der Fußauflagen 27 sind and die Schuhgröße einer durchschnittlich großen Person angepasst, so dass jeweils der gesamte Fuß des Fahrers aufgelegt werden kann. Dies erlaubt eine bequeme und sichere Sitzhaltung und eine entspannte Fahrweise, was insbesondere für ältere Personen besonders vorteilhaft ist.

Die Fußauflagen 27 besitzen die Form einer Wippe mit einem längeren Ende 33 und einem kürzeren Ende 31. Das längere Ende 33 weist in Fahrtrichtung 29 und dient zur Auflage des Vorfußes des Fahrers, das kürzere Ende 31 weist entgegen die Fahrtrichtung 29 und dient zur Auflage der Ferse des Fahrers.

Die wippenförmige Fußauflage 27 ist um eine quer zur Fahrtrichtung weisende Achse in zwei Richtungen schwenkbar. Die Schwenkachse fällt bevorzugt mit der Achse des Befestigungselements 28 zusammen. Die Fußauflagen 27 sind als Fußhebel ausgestaltet, mit denen Antriebskraft und Bremskraft steuerbar sind. Ein Herunterdrücken des vorderen Endes 33 der Fußauflage 27 kann z. B. die Stärke der Antriebskraft steuern. Ein Druck auf das hintere Ende 31 der Fußauflage 27 kann die Bremsen des Gefährts 43 betätigen. Der Schwenkbereich der Fußauflagen 27 ist auf einen Bereich begrenzt, der die Ausführung der Steuerfunktionen erlaubt.

Die Oberseite der Fußauflagen 27 ist im Wesentlichen plan ausgestaltet. Sie kann mit einer Struktur oder einer Beschichtung versehen sein, die rutschmindernde Eigenschaften aufweist, um ein Abrutschen eines Fußes während der Fahrt zu verhindern. Dies verbessert die Sicherheit für den Fahrer.

Die Fußauflagen 27 können aus einem Metall gefertigt sein. Es können aber auch, bei hinreichender Festigkeit, andere Materialien wie z.B. Kunst- oder Verbundstoffe oder Holz verwendet werden.

Der Durchmesser 35 des Antriebsrades 21 ist bevorzugt kleiner als die Hälfte des Durchmessers 37 der Rollstuhlräder 39 des Rollstuhls 3. Das Antriebsrad 21 ist unverlierbar mit dem Körper 25 der Antriebshilfe 1 verbunden und befindet sich zu einem Teil innerhalb des Körpers 25. dadurch wird eine Berührung des Fahrers mit dem Antriebsrad 21 verhindert. Im Inneren des Körpers 25 der Antriebshilfe 1 befinden sich außerdem die Antriebseinheit, bestehend aus einem Elektromotor und einem Energieträger, wie z. B. einem Akkumulator.

Die Haltegriffe 41 des Rollstuhls 3 dienen als Haltegriffe für den Fahrer und gleichzeitig als Lenkergriffe für das kombinierte Gefährt 43 aus Rollstuhl 3 und Antriebshilfe 1. Der Fahrer nimmt dadurch eine sichere Haltung auf der Antriebshilfe 1 ein und kann das Gefährt 43 bequem und leichtgängig lenken.

Fig. 2 zeigt das Ausführungsbeispiel aus Fig. 1 in der Betriebsstellung 13 in der Draufsicht. Zur übersichtlicheren Darstellung sind vom Rollstuhl 3 nur die zur Beschreibung notwendigen Elemente dargestellt.

Bei handelsüblichen Faltrollstühlen sind die Räder 39 einzeln aufgehängt. Die beiden Räder 39 bilden das Räderpaar 40. Die Achsen 45 der Räder 39 durchstoßen die Rohre 47 des Rollstuhlrahmens 49 und werden zur Befestigung ein Stück weit nach innen fortgesetzt. An diesen Achsfortsätzen 51 wird die Kupplungseinrichtung 5 der Antriebshilfe 1 unverlierbar befestigt. Rollstuhl und Antriebshilfe 1 bilden dann gemeinsam das Gefährt 43. Die Kupplungseinrichtung 5 wird im Wesentlichen aus einer quer zur Fahrtrichtung 29 weisenden Achsstrebe 53 gebildet.

Die Achsstrebe 53 ist im Wesentlichen rohrförmig ausgebildet. Sie ist unverlierbar über eine Achskupplung 57 mit den Achsfortsätzen 51 verbunden. Lässt sich die Achsstrebe 53 nicht direkt an den Achsfortsätzen 51 befestigen, kann die Kupplungseinrichtung 5 Adapter 52 aufweisen, die zunächst an den Achsfortsätzen 51 angebracht werden, um eine Befestigung der Achsstrebe 53 zu ermöglichen.

Die Kupplungseinrichtung 5 bildet also eine gemeinsame starre Achse der beiden Rollstuhlräder 39. Dies erhöht die Stabilität des Gefährts 43 und verbessert die Fahreigenschaften. Die Schubkraft der Antriebshilfe 1 wird über diese Achse auf die Rollstuhlräder 39 übertragen.

Die Achsstrebe 53 ist mit den Rollstuhlradachsen 45 schwenkbar verbunden, so dass die Achse der Achsstrebe 53 eine Schwenkachse 59 des kombinierten Gefährts 43 bildet. Die Achsstrebe 53 ist bevorzugt schwenkbar mit den Achsfortsätzen 51 verbunden. Dann fallen die Schwenkachse 59 des Gefährts 43 und die gemeinsame Achse 61 der Rollstuhlräder 39 zusammen. Diese Position der Schwenkachse 59 erlaubt es, die Fahreigenschaften des Gefährts 43 insbesondere beim Überwinden von kleinen Hindernissen oder beim Befahren von Steigungen wesentlich zu verbessern.

Wird dagegen die Achsstrebe 53 nicht schwenkbar mit den Achsfortsätzen 51 verbunden, sondern unbeweglich am Rollstuhl 3 befestigt, kann die Verbindung der Schubstange 7 zur Achsstrebe 53 schwenkbar ausgestaltet sein. In diesem Fall sind konstruktionsbedingte Abweichungen der Lage der Schwenkachse 59 zur Achse 61 der Räder 39 bis zu 2 cm tolerierbar.

Die Schubstange 7 ist an ihrem in Fahrtrichtung 29 weisenden Ende mit der Kupplungseinrichtung 5 verbunden. Die Achsstrebe 53 besitzt dazu eine Aufnahme 54. An dieser Aufnahme 54 ist sie von der Schubstange 7 durchsetzt. Die Schubstange 7 ist durch ein Befestigungselement 63 unverlierbar mit der Achsstrebe 53 verbunden. Schubstange 7 und Achsstrebe 53 bilden zusammen ein im Wesentlichen T-förmiges Gestänge 55.

Die Verbindung von Schubstange 7 zur Achsstrebe 53 ist um eine vertikale Achse drehbar ausgestaltet. Die Aufnahme 54 ist als Öffnung gestaltet, deren Größe und Querschnitt der Schubstange angepasst ist und hinreichend groß ist, um eine Bewegung um die vertikale Achse zu erlauben. Diese Achse bildet die Lenkachse 65 des kombinierten Gefährts 43. Die Lenkachse 65 fällt bevorzugt mit der Achse des Befestigungselements 63 zusammen.

Die Lenkachse 65 schneidet die Achse 61 der Rollstuhlräder 39. Dadurch wird eine besonders leichte Lenkung des kombinierten Gefährts 43 ermöglicht. Konstruktions- und fertigungstechnisch bedingte Abweichungen von Lenkachse 65 und der Achse 61 des Räderpaares von bis zu 4 cm sind dabei tolerierbar.

Die Verbindung von Schubstange 7 zur Achsstrebe 53 bildet also ein in zwei Achsen drehbares Gelenk 66, wobei sich das Gelenk 66 im Schnittebereich des T-förmigen Gestänges 55 befindet.

Die Stütze 11 des Sitzes 9 ist gabelförmig und mit den beiden Gabelschenkeln 14 an den Seiten des Körpers 25 der Antriebshilfe 1 durch Befestigungsorgane 23 verbunden.

Fig. 3 zeigt die Antriebshilfe 1 in der Transportstellung 67 abgekoppelt vom Rollstuhl 3. Der Sitz 9 und die dazugehörige Stütze 11 sind in dieser Stellung eingeklappt. In dem Ausführungsbeispiel ist das Gestänge 55 so ausgestaltet, dass der Sitz 9 platzsparend eingeklappt werden kann.

Die Antriebshilfe 1 besitzt in der Transportstellung 67 eine kleinere Kubatur als in der Betriebsstellung 13. Sie ist daher platzsparend und leicht zu verstauen, zum Beispiel im Kofferraum eines Pkws.

In dem Ausführungsbeispiel hat das Einklappen von Sitz 9 und der Stütze 11 über eine Betätigungseinrichtung 64 die Kupplungseinrichtung 5 vom Rollstuhl 3 gelöst. Die Antriebshilfe 1 ist daher vom Rollstuhl 3 abgekoppelt.

In der dargestellten Transportstellung 67 ruht die Antriebshilfe 1 auf einem Ständer 69, welcher in der Betriebsstellung 13 an den Körper 25 der Antriebshilfe 1 angelegt oder in den Körper 25 eingeschoben werden kann.

Die gabelförmige Stütze 11 weist eine Querstrebe 12 auf, die die beiden Gabelschenkel 14 miteinander verbindet. Die Querstrebe 12 verleiht der Stütze 11 zusätzliche Stabilität. Die Querstrebe 12 ist als Tragegriff 16 ausgestaltet oder kann einen Tragegriff tragen, so dass die Antriebshilfe 1 in der Transportstellung 67 an diesem Tragegriff 16 angehoben und transportiert werden kann.

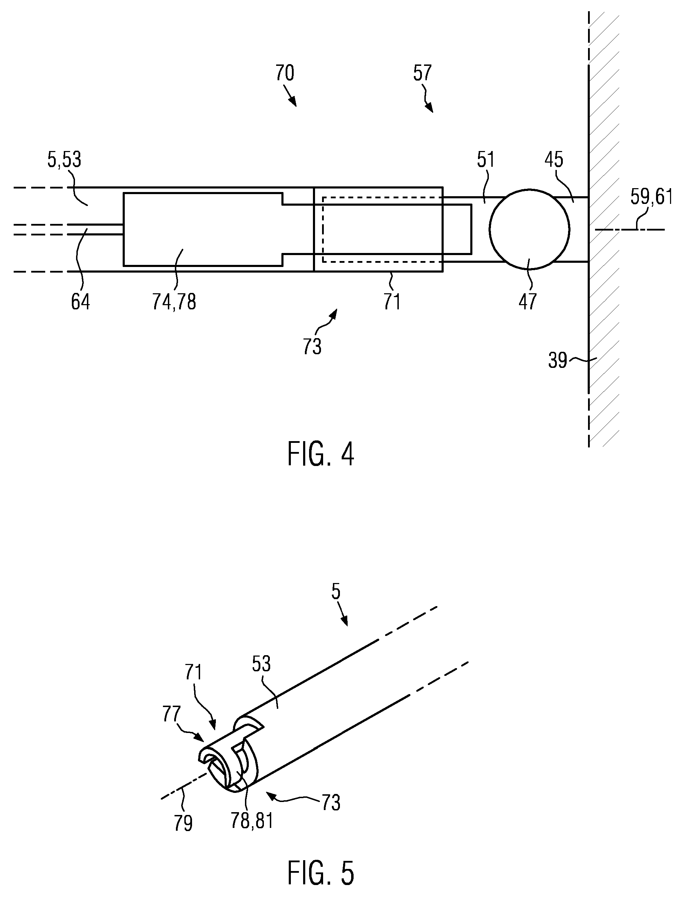

Fig. 4 zeigt eine Draufsicht auf ein Ausführungsbeispiel von Befestigungselementen 73 einer Achskupplung 57 der Antriebshilfe 1 in einer Betriebsstellung 13. Die Achsfortsätze 51 der Rollstuhlräder 39 sind durch röhrenförmige Adapter 52 verlängert worden. Die Adapter 52 können u. a. durch Verschweißen oder Verschrauben am Rollstuhl 3 angebracht werden. Auf diese Adapter 52 wird die Achsstrebe 53 der Kupplungseinrichtung 5 aufgelegt.

Die Enden 71 der Achsstrebe 53 sind halbrohrförmig ausgestaltet, so dass sie auf die röhrenförmigen Adapter 52 passen. Im inneren der Achsstrebe 53 befinden sich Verschiebelemente 74 als Sperrelemente 78, die in einer Kupplungsstellung 70 in die Adapter 52 eingeschoben sind und dadurch die Antriebshilfe 1 am Rollstuhl 3 verriegeln. In einer Montagestellung 68 werden diese Sperrelemente wieder in die Achsstrebe 53 zurückgeschoben, so dass sie nicht mehr in die Adapter 52 greifen, wodurch die Kupplungseinrichtung 5 vom Rollstuhl 3 gelöst ist.

Im gezeigten Ausführungsbeispiel sind die Sperrelemente 78 über eine Betätigungseinrichtung mit der Stütze 11 des Sitzes 9 verbunden.

Fig. 5 zeigt als Ausführungsbeispiel die schematische Darstellung eines Befestigungselements 73 mit einem Sperrelement 78, das durch ein Drehelement 77 gebildet wird. Das Befestigungselement 73 ist in der Kupplungsstellung 70 dargestellt.

Das Drehelement 77 ist um die Längsachse 79 der Achsstrebe 53 drehbar und besitzt eine Manschette 81. In der Montagestellung 68 ist das Drehelement 77 so gedreht, dass die Manschette 81 geöffnet ist und sich in das halbrohrförmige Ende 71 der Achsstrebe 53 einfügt. Die Kupplungseinrichtung 5 kann dann auf die Adapter 52 aufgelegt werden.

Das Drehelement 77 kann durch Drehung in die Kupplungsstellung 70 überführt werden. In der Kupplungsstellung 70 greift die Manschette 81 um das den Adapter 52, so dass die Kupplungseinrichtung 5 am Rollstuhl 3 verriegelt ist. Die Antriebshilfe 1 ist dann mit dem Rollstuhl 3 verbunden.

Auch bei diesem Ausführungsbeispiel können die Drehelemente 77 mit einer Betätigungseinrichtung 64 verbunden werden. Wird der Sitz 9 in die Transportstellung 67 überführt, so wird das Drehelement 77 in die Montagestellung 68 bewegt und die Antriebshilfe 1 vom Rollstuhl 3 gelöst. Wird der Sitz 9 dagegen in die Betriebsstellung 13 überführt, so wird das Drehelement 77 in die Kupplungsstellung 70 bewegt und die Antriebshilfe 1 am Rollstuhl 3 verriegelt.

### Bezugszeichen

- 1: Antriebshilfe
- 3: Rollstuhl
- 5: Kupplungseinrichtung
- 7: Schubstange
- 9: Sitz
- 11: Stütze
- 12: Querstrebe
- 13: Betriebsstellung
- 14: Gabelschenkel
- 15: Längsachse der Stütze
- 16: Tragegriff
- 17: Schwerkraftrichtung
- 19: Achse des Antriebsrades
- 21: Antriebsrad
- 23: Befestigungsorgan
- 25: Körper der Antriebshilfe
- 27: Fußauflage
- 28: Befestigungsorgane
- 29: Fahrtrichtung
- 31: kurzes Ende der Fußauflage
- 33: langes Ende der Fußauflage
- 35: Durchmesser des Antriebsrades
- 37: Durchmesser der Rollstuhlräder
- 39: Rollstuhlräder
- 40: Räderpaar
- 41: Rollstuhlhaltegriffe
- 43: kombiniertes Gefährt
- 45: Achsen der Rollstuhlräder
- 47: Rohr
- 49: Rollstuhlrahmen
- 51: Achsfortsätze
- 53: Achsstrebe
- 54: Aufnahme
- 55: Gestänge
- 57: Achskupplung
- 59: Schwenkachse
- 61: Achse des Räderpaares
- 63: Befestigungselement
- 64: Betätigungseinrichtung
- 65: Lenkachse
- 66: Gelenk
- 67: Transportstellung
- 68: Montagestellung
- 69: Ständer
- 70: Kupplungsstellung
- 71: Enden der Achsstrebe
- 73: Befestigungselemente
- 74: Verschiebeelement
- 77: Drehbares Befestigungselement
- 78: Sperrelement
- 79: Längsachse der Achsstrebe
- 81: Manschette

## Patentansprüche

1. Separate Antriebshilfe (1) für rollbare Personen- oder Lastenträger (3), insbesondere für Rollstühle, mit einem Antriebsmotor, wenigstens einem Antriebsrad (21), wenigstens einem Sitz (9) für einen Fahrer, und einer Kupplungseinrichtung (5), durch die die Antriebshilfe (1) an dem Personen- oder Lastenträger (3) wiederholt lösbar befestigbar ist, wobei die Kupplungseinrichtung (5) ein Gelenk (66) aufweist, das zwischen der Kupplungseinrichtung (5) und dem Antriebsrad (21) angeordnet ist, **dadurch gekennzeichnet, dass** im am Personen- oder Lastenträger (3) montierten Zustand der Antriebshilfe (1) das Gelenk (66) mit einer Radachse (61) des Personen- oder Lastenträgers (3) fluchtet.

2. Separate Antriebshilfe (1) nach Anspruch 1, **dadurch gekennzeichnet, dass** das Gelenk (66) zwei Gelenkachsen aufweist, wobei das Gelenk (66) in zwei Freiheitsgraden bewegbar ist und sich die beiden Gelenkachsen schneiden.

3. Separate Antriebshilfe (1) nach Anspruch 1 oder 2, **dadurch gekennzeichnet, dass** die Antriebshilfe (1) zwischen dem Gelenk (66) und dem Antriebsrad (21) eine in Fahrtrichtung (29) weisende Schubstange (7) aufweist.

4. Separate Antriebshilfe (1) nach Anspruch 3, **dadurch gekennzeichnet, dass** die Kupplungseinrichtung (5) eine quer zur Fahrtrichtung (29) weisende Achsstrebe (53) aufweist.

5. Separate Antriebshilfe (1) nach Anspruch 3 oder 4, **dadurch gekennzeichnet, dass** die Achsstrebe (53) und die Schubstange (7) ein T-förmiges Gestänge (55) bilden.

6. Separate Antriebshilfe (1) nach Anspruch 5, **dadurch gekennzeichnet, dass** sich das Gelenk (66) im Schnittbereich des T-förmigen Gestänges (55) befindet.

7. Separate Antriebshilfe (1) nach einem der Ansprüche 1 bis 6, **dadurch gekennzeichnet, dass** die Achsstrebe (53) komplementär zu Achsfortsätzen (51) einer Achse (61) des Personen- oder Lastenträgers (3) ausgebildet ist.

8. Separate Antriebshilfe (1) nach einem der Ansprüche 1 bis 7, **dadurch gekennzeichnet, dass** die Kupplungseinrichtung (5) mit ihrer Achsstrebe (53) drehbar mit den Achsfortsätzen (51) verbunden ist.

9. Separate Antriebshilfe (1) nach einem der Ansprüche 1 bis 8, **dadurch gekennzeichnet, dass** die Achsstrebe (53) von der Schubstange (7) durchsetzt ist und dass eine Gelenkachse (65) in dem Bereich der Durchsetzung angeordnet ist.

10. Separate Antriebshilfe (1) nach einem der Ansprüche 1 bis 9, **dadurch gekennzeichnet, dass** sich die Achsstrebe (53) durchgängig zwischen den Achsfortsätzen (51) des Personen- oder Lastenträgers (3) erstreckt.

11. Separate Antriebshilfe (1) nach einem der Ansprüche 1 bis 10, **dadurch gekennzeichnet, dass** die Kupplungseinrichtung (5) an den Enden (71) der Achsstrebe (53) Befestigungselemente (73) aufweist, die komplementär zu den Achsfortsätzen (51) ausgestaltet sind.

12. Separate Antriebshilfe (1) nach Anspruch 11, **dadurch gekennzeichnet, dass** die Befestigungselemente (73) Sperrelemente (78) aufweisen, wobei die Sperrelemente (78) aus einer Montagestellung (68), in der sie von den Achsfortsätzen (51) gelöst sind, in eine Kupplungsstellung (70) bewegbar sind, in der sie an den Achsfortsätzen (51) verriegelt sind.

13. Separate Antriebshilfe (1) nach Anspruch 12, **dadurch gekennzeichnet, dass** die Sperrelemente (78) mit einer Betätigungseinrichtung (64) verbunden und durch die Betätigungseinrichtung (64) zwischen Montagestellung (68) und Kupplungsstellung (70) bewegbar sind.

14. Separate Antriebshilfe (1) nach Anspruch 13, **dadurch gekennzeichnet, dass** der Sitz (9) aus einer Betriebsstellung (13) in eine Transportstellung (67) beweglich ist, wobei die Kubatur der Antriebshilfe (1) in der Transportstellung (67) kleiner als in der Betriebsstellung (13) ist, dass die Betätigungseinrichtung (64) bedienungsseitig mit dem Sitz (9) gekoppelt ist, wobei in der Transportstellung (67) die Sperrelemente (78) über die Betätigungseinrichtung (64) in die Montagestellung (68) überführt sind, so dass die Antriebshilfe (1) vom Personen- oder Lastenträger (3) gelöst ist und in der Betriebsstellung (13) über die Betätigungseinrichtung (64) in die Kupplungsstellung (70) überführt sind, in der die Antriebshilfe (1) am Personen- oder Lastenträger (3) befestigt ist.
